# FASCICULE DE BREVET EUROPEEN

(11) **EP 0 300 207 B1**
(45) Date de publication et mention de la délivrance du brevet: **16.06.1993**
(21) Numéro de dépôt: 88109807.3
(22) Date de dépôt: 18.09.1985
(51) Int. Cl.: A01D 34/66

(54) **Faucheuse rotative**
Kreiselmäher
Rotary mower

(30) Priorité: 19.09.1984 FR 8414487
(43) Date de publication de la demande: 25.01.1989
(62) Demande divisionnaire de: 85440053.8
(73) Titulaire: KUHN S.A., F-67700 Saverne (FR)
(72) Inventeur: Wolff, Michel, F-67670 Mommenheim (FR)

(56) Documents cités:
- EP-A- 0 206 965
- FR-A- 1 534 878
- FR-A- 2 351 578
- FR-A- 2 521 389
- GB-A- 2 002 622

## Description

La présente invention concerne une faucheuse rotative munie d'au moins deux organes de coupe disposés au-dessus d'un carter de telle sorte que dans une paire d'organes de coupe adjacents, l'un des organes de coupe soit incliné vers l'avant par rapport à l'autre organe de coupe pour tourner dans un plan de rotation différent, lesdits organes de coupe étant chacun liés à un arbre dirigé vers le haut qui est guidé en rotation dans un palier s'étendant à la partie supérieure dudit carter, lesdits organes de coupe étant entraînés en rotation par des moyens d'entraînement comportant notamment une roue fixée sur chaque arbre dirigé vers le haut et un organe de transmission sans fin coopérant avec ladite roue.

Dans la FR-A-1 534 878, on connaît une telle faucheuse qui comporte une paire d'organes de coupe adjacents dont l'un est incliné par rapport à l'autre. Cette inclinaison permet aux organes de coupe de tourner dans des plans de rotation différents tout en ayant les points avant des trajectoires extrêmes décrites par les outils de coupe équipant lesdits organes de coupe au même niveau par rapport à la surface du sol. Dans cette faucheuse connue, chaque organe de coupe est muni d'une roue et est entraîné par une propre courroie. Ceci a nécessité l'agencement d'un mécanisme complexe et lourd d'entraînement et d'inversion de rotation. Du reste, cette faucheuse connue ne comporte que deux organes de coupe. Si on voulait construire une telle faucheuse avec plus de deux organes de coupe, le mécanisme d'entraînement et d'inversion deviendrait encore plus complexe et plus lourd.

Le but de la présente invention est de remedier aux inconvénients de cette faucheuse connue.

A cet effet, la faucheuse rotative selon la présente invention est caractérisée par le fait que l'organe de transmission sans fin entraîne au moins deux organes de coupe adjacents et que la roue d'un organe de coupe le plus incline vers l'avant est plus éloignée de cet organe de coupe que la roue d'un autre organe de coupe adjacent, de telle sorte que ladite roue d'un organe de coupe le plus incliné vers l'avant s'étende dans le voisinage du niveau dans lequel s'étend la roue d'un autre organe de coupe adjacent.

Avec cette caractéristique il est possible de construire une faucheuse dont les moyens d'entraînément sont relativement simples. En effet, l'invention prévoit tout d'abord d'entraîner plusieurs organes de coupe avec un même organe de transmission sans fin. Mais l'invention prévoit en sus que la roue equipant un organe de coupe le plus incliné vers l'avant et entraînée par cet organe de transmission sans fin, soit plus eloignee de son organe de coupe correspondant que la roue également entraînée par cet organe de transmission sans fin et équipant un autre organe de coupe. Du reste, l' invention prévoit encore que ces roues s'étendent sensiblement au même niveau. Ainsi, l'organe de transmission sans fin tournera sur des roues s'étendant dans des plans relativement rapprochés l'un de l'autre. Ceci garantit un entraînement sans incident et une grande durée de vie à l'organe de transmission sans fin. En sus, ceci permet de donner au carter de la faucheuse qui contient ces roues et cet organe de transmission sans fin, une épaisseur relativement uniforme et suffisante pour qu'il puisse bien encaisser les sollicitations auxquelles il est soumis et ceci tout en gardant une hauteur de coupe relativement réduite. D'autres caractéristiques de l'invention apparaitront dans les sous-revendications et dans la description suivante d'un exemple de réalisation non limitatif de l'invention représenté sur le dessin annexé sur lequel :
- la figure 1 représente une vue arrière de la barre de coupe d'une faucheuse conforme à l'invention,
- la figure 2 représente une vue de la barre de coupe coupée suivant le plan II,
- la figure 3 représente une vue de la barre de coupe coupée suivant le plan III, (l'organe de coupe a été tourné de 90°), et
- la figure 4 représente une coupe transversale de la liaison arbre-roue.

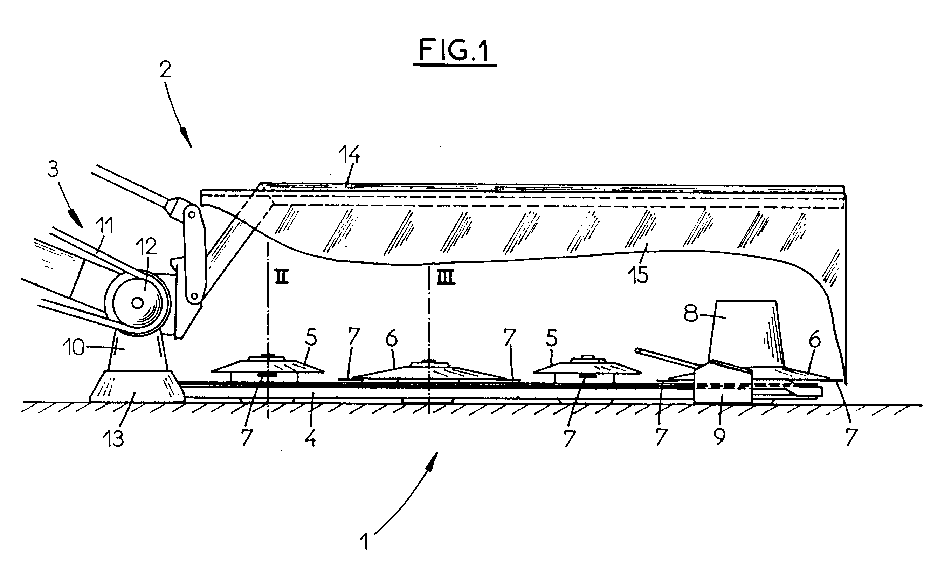

Sur la figure 1 est représentée la barre de coupe (1) d'une faucheuse (2). Cette faucheuse (2) comporte par ailleurs un dispositif d'attelage (3) qui n'est que partiellement représenté et qui permet d'atteler la barre de coupe (1) à un tracteur agricole par exemple, non représenté sur le dessin.

La barre de coupe (1) comporte un carter (4) dans lequel s'étendent des moyens d'entraînement des organes de coupe (5,6). Ces organes de coupe comportent dans l'exemple représenté des disques. Les disques (5, 6) s'étendent à la partie supérieure du carter (4) et sont munis d'outils de coupe tels que les couteaux (7). Le disque (6) situé à l'extrémité de la barre de coupe (1) éloignée du dispositif d'attelage (3), est surmonté par un dispositif d'andainage rotatif (8). Ce dispositif d'andainage rotatif (8) collabore avec un dispositif d'andainage fixe (9) pour réduire la largeur de l'andain de fourrage coupé déposé derrière la barre de coupe (1).

A l'extrémité de la barre de coupe (1) située du côté du dispositif d'attelage (3), s'étend un carter de renvoi (10). Ce carter de renvoi (10) sert à transmettre le mouvement depuis la courroie (11) jusqu'aux moyens d'entraînement s'étendant dans le carter (4) de la barre de coupe (1). A cet effet, le carter de renvoi (10) comporte une poulie (12) sur laquelle s'enroule la courroie (11) qui s'enroule par ailleurs sur une autre poulie non représentée soutenue par le dispositif d'attelage (3) et qui reçoit le mouvement de la prise de force du tracteur par l'intermédiaire d'un arbre de transmission non représenté.

Le carter de renvoi (10) sert également d'une manière connue de l'homme de l'art à lier la barre de coupe (1) au dispositif d'attelage (3).

Sous le carter de renvoi (10) est agencé un sabot (13) qui permet à cette extrémité de la barre de coupe (1) de glisser sur le sol et qui évite que du fourrage coupé ne puisse s'accrocher au carter de renvoi (10).

Au-dessus de la barre de coupe (1) s'étend un support (14) qui maintient un dispositif de protection (15).

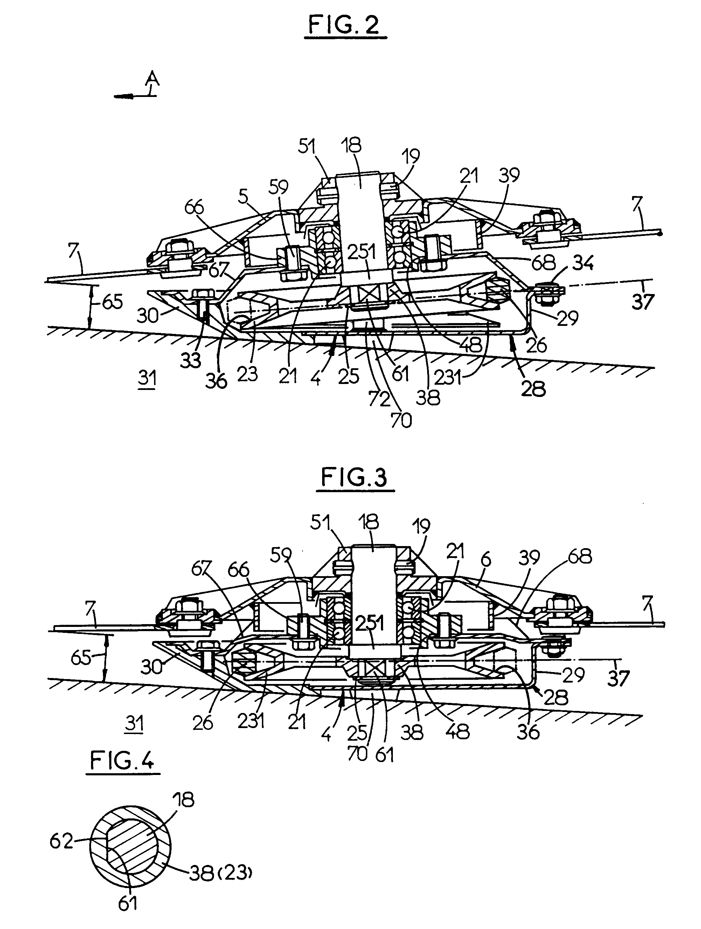

Tel qu'il sera visible sur les figures 2 et 3, les moyens d'entraînement logés dans le carter (4) ne peuvent pas empêcher que les disques (5, 6) se désynchronisent pendant le travail. Pour éviter que les couteaux (7) ne puissent entrer en collision, les disques (5) tournent dans des plans de rotation différents et plus haut que ceux dans lesquels tournent les disques (6). Les couteaux (7) peuvent ainsi balayer des zones communes en vue en plan, sans que lesdits couteaux (7) ne puissent se toucher même s'ils balayent sensiblement en même temps lesdites zones après que les disques se soient désynchronisés.

La figure 2 montre l'agencement d'un disque haut (5) qui est plus incliné vers l'avant qu'un disque bas (6) (voir figure 3) lequel est, dans l'exemple, faiblement incliné vers l'avant. Le disque (5) est muni de couteaux (7) qui y sont montés au moyen d'une liaison permettant à chaque couteau (7) de pivoter vers l'arrière et de se ranger sous le disque (5) en cas de rencontre avec un obstacle. Le disque (5) est fixé sur un entraîneur (51) par soudage. L'ensemble disque (5) - entraîneur (51) est monté sur un arbre (18) dirigé vers le haut et y est fixé au moyen d'une goupille (19). L'arbre (18) est guidé en rotation dans un palier (66) par l'intermédiaire de deux roulements (21). Ce palier est centré dans un alésage (48) correspondant réalisé dans le couvercle (67) du carter (4) et est fixé audit couvercle (67) à l'aide de vis (59). A l'intérieur du carter (4), l'arbre (18) est lié à une roue (23). Cette liaison est démontable. Dans cet exemple de réalisation la liaison en rotation est assurée par un méplat (61) réalisé sur l'arbre (18) qui collabore avec un trou broché (62) réalisé dans le moyeu (38) de la roue (23) (voir figure 4). La liaison en translation par contre est réalisée au moyen d'un circlips (25) et d'un épaulement (251) de l'arbre (18).

La roue (23) est entraînée par un organe de transmission sans fin tel que la courroie héxagonale (26).

Le carter (4) est constitué par le couvercle (67) et par un fond (28). Ce fond (28) en forme d'auge comporte une partie (29) en tôle pliée et des moyens de glissement et de protection du disque (30). Les moyens (30) permettent notamment à la barre de coupe (1) de glisser sur le sol (31). A cet effet, ils ont une forme de ski. Comme ces moyens (30) sont soumis à une forte usure, il est préférable de pouvoir les changer rapidement. Dans ce but, les moyens de glissement (30) sont fixés de manière démontable sur la partie arrière (29) et le couvercle (67) au moyen de vis non représentées, vissées dans des bossages filetés (70) des moyens de glissement et de protection du disque (30) et s'étendant à l'intérieur d'entretoises (72) qui s'étendent entre le fond (28) et le couvercle (67) du carter (4). A l'avant, lesdits moyens (30) sont fixés sur le couvercle (67) seul à l'aide de vis (33). Le couvercle (67) et la partie arrière (29) sont, quant à eux, liés à l'arrière par des vis (34).

Pour ne pas alourdir le carter (4), les moyens de glissement et de protection du disque (30) font partie intégrante du carter (4) et ferment en partie au moins la face frontale et en partie au moins la face inférieure dudit carter (4).

La figure 3 montre l'agencement d'un disque bas (6) qui est, dans l'exemple représenté, faiblement incliné vers l'avant. Les pièces identiques à celles de la figure 2 gardent le même repère. Le disque bas (6) est également muni de couteaux (7). Ce disque (6) est soudé sur un entraîneur (51). Tout comme précédemment, l'entraîneur (51) est fixé sur un arbre (18) dirigé vers le haut au moyen d'une goupille (19).

L'arbre (18) est guidé en rotation dans un palier (66) par l'intermédiaire de deux roulements (21). Ledit palier (66) est identique au palier (66) équipant un organe de coupe haut (5). Il est également centré dans un alésage (48) aménagé dans le couvercle (67) du carter (4) et est fixé sur ledit couvercle (67) au moyen de vis (59). A l'intérieur du carter (4), l'arbre (18) est lié à une roue (231) également entraîné par la courroie héxagonale (26). Cette roue (231) est identique à la roue (23) équipant un organe de coupe haut (5).

Sur les figures 2 et 3, on voit encore que les disques (5 et 6) sont munis d'un organe d'arrêt (39) qui limite la rotation des couteaux (7). Ceci permet de protéger le palier (66) lorsqu'un couteau (7) se range sous le disque (5, 6) correspondant.

Parallèlement, cet organe d'arrêt (39) peut également servir à rigidifier le disque.

Comme dit plus haut un disque haut (5) est plus incliné vers l'avant qu'un disque bas (6). De cette sorte, à l'avant de leur trajectoire, les couteaux (7) du disque haut (5) peuvent passer sensiblement à la même distance (65) du sol (31) que les couteaux (7) d'un disque bas (6), alors qu'aux endroits critiques, lesdits couteaux (7) évoluent à des niveaux différents. Le travail effectué par la faucheuse est ainsi très satisfaisant.

Comme dit plus haut également, les arbres (18) des disques hauts (5) et bas (6) sont guidés en rotation dans des paliers (66) identiques. Les paliers (66) sont fixés sur le couvercle (67) du carter (4) au moyen des vis (59) qui sont les mêmes pour les disques hauts (5) et les disques bas (6). Le décalage en hauteur des disques hauts (5) est obtenu par des renflements (68) réalisés dans le couvercle (67) par emboutissage par exemple. Ces renflements (68) s'étendent aux endroits où sont fixés les disques hauts (5) et servent par ailleurs à déterminer l'inclinaison desdits disques hauts (5) par rapport aux disques bas (6).

En sus, le sommet des renflements (68) de même que les endroits du couvercle (67) situés sous les disques bas (6) s'étendent relativement près des organes d'arrêt (39) des disques (5, 6). Ces organes d'arrêt (39) peuvent ainsi remplir la fonction supplémentaire qui consiste en la création d'une chicane évitant l'enroulement de débris végétaux ou de corps filiformes quelconques autour du palier (66) et freinant l'introduction de tels débris végétaux ou corps quelconques entre les disques (5, 6) et lesdits paliers (66). Les roulements (21) sont ainsi efficacement protégés, ce qui augmente leur durée de vie.

On voit en sus sur les figures 2 et 3 que la roue (23) du disque haut (5), c'est-à-dire le plus incliné vers l'avant, est plus éloignée dudit disque (5) que la roue (231) du disque bas (6) adjacent. Cet éloignement est, dans l'exemple, tel que la partie avant de ces roues inclinées (23) s'étende sensiblement au même niveau que la partie avant des roues (231).

Comme dit plus haut, la roue (231) est identique à la roue (23). De même, l'arbre (18) d'un disque haut (5) est identique à celui d'un disque bas (6). Pourtant la roue (23) d'un disque haut (5) est plus éloignée dudit disque (5) que la roue (231) d'un disque bas (6). Ce résultat a été obtenu par le fait que la roue (231) d'un disque bas (6) occupe une autre position par rapport à son arbre (18) que la roue (23) d'un disque haut (5). Pour ce faire, les roues (23, 231) ont un moyeu (38) qui est décentré par rapport au plan de symétrie (37) de leur gorge (36). Ainsi dans le cas d'un disque haut (5), le moyeu (38) de la roue (23) se situe pour l'essentiel au-dessus du plan de symétrie (37) de la gorge (36), tandis que dans le cas d'un disque bas (6), le moyeu (38) de la roue (231) se situe pour l'essentiel en-dessous du plan de symétrie (37) de sa gorge (36).

Tel qu'il vient d'être décrit, cet exemple de réalisation est très économique puisque pour les disques (5) les plus inclinés vers l'avant et pour les autres disques (6), les arbres (18), les roues (23, 231), les paliers (66) et les vis (59) qui fixent les paliers (66) sur le couvercle (67) du carter (4) sont identiques.

Par ailleurs, dans les deux cas, les paliers (66) sont centrés dans le couvercle (67) du carter (4), et dans les deux cas, les organes, d'arrêt (39) forment avantageusement une chicane avec la face supérieure du couvercle (67) du carter (4).

## Revendications

1. Faucheuse rotative munie d'au moins deux organes de coupe (5, 6) disposes au-dessus d'un carter (4) de telle sorte que dans une paire d'organes de coupe adjacents, l'un des organes de coupe (5) soit incline vers l'avant par rapport à l'autre organe de coupe (6) pour tourner dans un plan de rotation différent, lesdits organes de coupe étant chacun lies à un arbre (18) dirigé vers le haut qui est guidé en rotation dans un palier (66) s'étendant à la partie supérieure dudit carter, lesdits organes de coupe (5, 6) étant entraînés en rotation par des moyens d'entraînement comportant notamment une roue (23, 231) fixée sur chaque arbre dirigé vers le haut et un organe de transmission sans fin (26), coopérant avec ladite roue, caractérisée par le fait que l'organe de transmission sans fin (26) entraîne au moins deux organes de coupe adjacents (5, 6) et que la roue (23) d'un organe de coupe (5) le plus incliné vers l'avant est plus éloignée de cet organe de coupe (5) que la roue (231) d'un autre organe de coupe adjacent (6) de telle sorte que ladite roue (23) d'un organe de coupe (5) le plus incliné vers l'avant s'étende dans le voisinage du niveau dans lequel s'étend la roue (231) d'un autre organe de coupe adjacent (6).

2. Faucheuse rotative selon la revendication 1, caractérisée par le fait que la partie avant des roues (23) liées aux organes de coupe (5) les plus inclinés vers l'avant, s'étend sensiblement au même niveau que la partie avant des roules (231) liées aux autres organes de coupe (6).

3. Faucheuse rotative selon l'une au moins des revendications 1 ou 2, caractérisée par le fait que dans une paire d'organes de coupe (5, 6) adjacents, l'un (5) desdits organes de coupe est plus incliné vers l'avant que l'autre organes de coupe (6).

4. Faucheuse rotative selon l'une au moins des revendications 1 à 3, caractérisée par le fait que les paliers (66) des organes de coupe (5) les plus inclinés vers l'avant et les paliers (66) des autres organes de coupe (6) sont identiques et que le couvercle (67) du carter (4) comporte des renflements (68) qui déterminent les plans de rotation dans lesquels tournent les organes de coupe (5) les plus inclinés vers l'avant.

5. Faucheuse rotative selon la revendication 4, caractérisée par le fait que des organes (39) aménagés sur les organes de coupe (5, 6), s'étendent dans le voisinage de la partie supérieure des renflements (68) s'étendant sous les organes de coupe (5) les plus inclinés vers l'avant et dans le voisinage de la partie supérieure du couvercle (67) s'étendant sous les autres organes de coupe (6) pour former une chicane.

6. Faucheuse rotative selon l'une au moins des revendications 4 ou 5, caractérisée par le fait que les renflements (68) sont réalisés dans le couvercle (67) du carter (4) par emboutissage.

## Claims

1. Rotary mower provided with at least two cutting elements (5, 6) located above a housing (4) so that in a pair of adjacent cutting elements, one (5) of these cutting elements is forwardly inclined with regard to the other cutting element (6) to rotate in a different plane of rotation, said cutting elements being each connected to an upwardly directed shaft (18) which is guided in rotation in a bearing (66) extending at the upper part of said housing, said cutting elements (5, 6) being driven in rotation by driving means particularly comprising a wheel (23, 231) fastened to each upwardly directed shaft and an endless transmission element (26) cooperating with said wheel, characterized in that the endless transmission element (26) drives at least two adjacent cutting elements (5, 6) and that the wheel (23) of one most forwardly inclined cutting element (5) is farther away from this cutting element (5) than the wheel (231) from another adjacent cutting element (6), so that said wheel (23) of a most forwardly inclined cutting element (5) extends in the vicinity of the level in which the wheel (231) of another adjacent cutting element (6) extends.

2. Rotary mower according to claim 1, characterized in that the front part of the wheels (23) connected to the most forwardly inclined cutting elements (5) extends approximately at the same level than the front part of the wheels (231) connected to the other cutting elements (6).

3. Rotary mower according to at least one of claims 1 or 2, characterized in that in a pair of adjacent cutting elements (5, 6), one (5) of said cutting elements is more forwardly inclined than the other cutting element (6).

4. Rotary mower according to at least one of claims 1 to 3, characterized in that the bearings (66) of the most forwardly inclined cutting elements (5) and the bearings (66) of the other cutting elements (5) are identical and that the cover (67) of the housing (4) comprises bulges (68) which determine the planes of rotation in which the most forwardly inclined cutting elements (5) rotate.

5. Rotary mower according to claim 4, characterized in that elements (39) arranged on the cutting elements (5, 6), extend in the vicinity of the upper part of the bulges (68) extending under the most forwardly inclined cutting elements (5) and in the vicinity of the upper part of the cover (67) extending under the other cutting elements (6) to form a baffle.

6. Rotary mower according to at least one of claims 4 or 5, characterized in that the bulges (68) are made in the cover (67) of the housing (4) by stamping.

## Patentansprüche

1. Kreiselmäher mit mindestens zwei derart oberhalb eines Gehäuses (4) angeordneten Schneidorganen (5, 6), dass das eine Schneidorgan (5) eines Paares benachbarter Schneidorgane bezogen auf das andere Schneidorgan (6) nach vorne geneigt ist, um in einer unterschiedlichen Rotationsebene zu drehen, welche Schneidorgane jeweils mit einer nach oben gerichteten Welle (18) verbunden sind, die drehbar in einem im oberen teil des Gehäuses angeordneten Lager (66) geführt ist, wobei die Schneidorgane (5, 6) durch Antriebsmittel in Drehung versetzt werden, die insbesondere eine auf jeder nach oben gerichteten Welle befestigte Scheibe (23, 231) und ein endloses, mit der Scheibe zusammenarbeitendes Transmissionsorgan (26) umfassen, dadurch gekennzeichnet, dass das endlose Transmissionsorgan (26) mindestens zwei benachbarte Schneidorgane (5, 6) antreibt und dass die Scheibe (23) eines stärker nach vorne geneigten Schneidorganes (5) weiter von diesem Schneidorgan (5) entfernt ist als die Scheibe (231) eines anderen benachbarten Schneidorgans (6), so dass die Scheibe (23) eines stärker nach vorne geneigten Schneidorgans (5) sich annähernd in der Höhenlage erstreckt, in der sich die Scheibe (231) eines anderen benachbarten Schneidorgans (6) erstreckt.

2. Kreiselmäher nach Anspruch 1, dadurch gekennzeichnet, dass sich der Vorderteil der mit den stärker nach vorne geneigten Schneidorganen (5) verbundenen Scheiben (23) im wesentlichen in der gleichen Höhenlage erstreckt wie der Vorderteil der mit den anderen Schneidorganen (6) verbundenen Scheiben (231).

3. Kreiselmäher nach mindestens einem der Ansprüche 1 oder 2, dadurch gekennzeichnet, dass das eine Schneidorgan (5) eines Paares von benachbarten Schneidorganen (5, 6) stärker nach vorne geneigt ist als das andere Schneidorgan (6).

4. Kreiselmäher nach mindestens einem der Ansprüche 1 bis 3, dadurch gekennzeichnet, dass die Lager (66) der stärker nach vorne geneigten Schneidorgane (5) und die Lager (66) der anderen Schneidorgane (6) identisch sind und dass der Deckel (67) des Gehäuses (4) Auswölbungen (68) aufweist, die die Rotationsebenen bestimmen, in welchen sich die stärker nach vorne geneigten Schneidorgane (5) drehen.

5. Kreiselmäher nach Anspruch 4, dadurch gekennzeichnet, dass sich an den Schneidorganen (5, 6) angeordnete Organe (39) in der Nähe des oberen Teils der Auswölbungen (68) ertrecken, die sich unter den stärker nach vorne geneigten Schneidorganen (5) und in der Nähe des oberen Teils des Deckels (67) erstrecken, der sich unter den anderen Schneidorganen (6) befindet, um eine Schikane zu bilden.

6. Kreiselmäher nach mindestens einem der Ansprüche 4 oder 5, dadurch gekennzeichnet, dass die Auswölbungen (68) im Deckel (67) des Gehäuses (4) durch Tiefziehen hergestellt sind.
